# EUROPEAN PATENT SPECIFICATION

(11) **EP 0 488 698 B1**
(45) Date of publication and mention of the grant of the patent: **07.02.1996**
(21) Application number: 91310972.4
(22) Date of filing: 28.11.1991
(51) Int. Cl.: B07B 1/08, B07B 1/00, B07B 1/46

(54) **A screening system**
Siebvorrichtung
Dispositif de tamisage

(30) Priority: 29.11.1990 GB 9026028
(43) Date of publication of application: 03.06.1992
(73) Proprietor: ECC INTERNATIONAL LIMITED, St. Austell Cornwall PL25 4DJ (GB)
(72) Inventor: Jones, Thomas Richard, St. Austell, Cornwall PL25 (GB); Falcon-Steward, Hugh Robin, St. Austell, Cornwall PL25 7EX (GB); Phillips, Reginald Leyland, St. Austell, Cornwall PL25 4BJ (GB)
(74) Representative: Walters, Frederick James

(56) References cited:
- WO-A-90/06396
- WO-A-91/01815
- DE-A- 2 018 677
- DE-A- 3 138 430
- GB-A- 4 451
- GB-A- 1 102 700
- US-A- 4 613 432

## Description

The present invention concerns an arrangement whereby a suspension of solid particulate material in a liquid is passed through a rotating screen or sieve in order to separate continuously relatively coarse particles from finer particles within the suspension.

It has been found that although a continuous screening operation as aforementioned is effective, commercial requirements demand a high throughput of the particulate material and it is an object of the present invention to provide a process and apparatus which goes towards satisfying the aforementioned demand and also which provides for improved screening over the proposals in the prior art mentioned below.

Pursuant to Rule 21(1)(b) EPC reference is made to the following prior Patent Specifications. DE-A-2,018,677 which discloses an apparatus and process for continuously separating relatively coarse particles from a suspension of a mixture of particles in a liquid where a planar screen presents an upwardly concave frusto conical surface and is mounted on and over the open top of a hollow drum so that the screen and drum are rotatable about a vertical axis. The suspension is deposited on the central region of the rotating screen for coarse particles in the suspension to move radially over the screen while liquid containing relatively fine particles passes through the screen into the rotating drum and therefrom through an opening in the bottom of the drum for collection. DE-A-3,138,430 which relates to the sieving of dry particulate material in which the material is deposited on a stationary screen and swept over the screen by rotating blades. A pressure differential can be developed across the stationary screen to promote the sieving process by connecting a suction device to an outlet of a collection drum for the fine particles that have passed through the screen or by connecting a compressor to an inlet through which the particulate material is deposited on the screen. GB-A-4451 (A.D. 1913) which discloses a coal washing plant in which solid material is separated from a suspension on a stationary filter bed carried by a frame. A vacuum chamber is provided beneath the filter bed and connected to a vacuum pump for drawing off the filtrate and promoting the rate of filtration.

GB-A-1,102,700 discloses the separation of particulate material from liquid in which the material is in suspension and such suspension is deposited on a screen which rotates with a funnel that underlies the screen and has a bottom outlet opening through which liquid passing through the screen is drawn off from the funnel. The interior of the funnel beneath the screen is connected to a vacuum pump or a fan to extract air and reduce the pressure in the funnel.

We would also draw attention to our EP-B-0411803 which is a reference under Article 54(3) EPC and discloses a process and apparatus of the kind to which the present invention relates in which liquid passing through a rotating screening medium is received by a rotating drum and is displaced from the drum during rotation thereof in a direction radially outwardly through holes provided in a side wall of the drum.

In accordance with the invention there is provided a process for continuously separating relatively coarse particles from a suspension of a mixture of particles in a liquid which comprises passing the suspension through a screening medium which is rotating in its own plane so that the coarse particles are retained on the surface of the screening medium; receiving liquid passing through the screening medium within a drum rotating below the screening medium, and developing a differential pressure (ΔP) by sucking out air in the confines of the drum so that atmospheric pressure above the screening medium is in excess of the pressure below the screening medium, CHARACTERISED BY developing a venturi effect at an opening in a side wall of the drum as a result of rotation of the drum for that effect to provide said sucking out of air from within the confines of the drum and thereby create a partial vacuum within the drum and controlling said differential pressure (ΔP) to be within a predetermined range by admitting air at atmospheric pressure into the rotating drum when the differential pressure (ΔP) exceeds a maximum of the predetermined range.

A pressurised gas may be applied above the screening medium, and may be compressed air.

When the drum is formed at its lower portion with a plurality of holes for the emission of the finer particles in suspension after screening, the partial vacuum may be created by means of a plurality of outwardly projecting members provided on the drum adjacent the holes, whereby rotation of the drum creates the venturi effect over the outer face of the members thereby sucking out the air through the holes.

The air at atmospheric pressure may be caused to enter the area below the screening medium via a valve which is automatically actuated in response to a variation in the differential pressure (ΔP) which causes ΔP to rise above the maximum of the predetermined range.

The invention further comprises apparatus for continuously separating relatively coarse particles from a suspension of a mixture of particles in a liquid which comprises a screening medium rotatable in its own plane and means for rotating the screening medium; means for depositing the suspension on a surface of the rotating screening medium so that the coarse particles are retained on said surface of the screening medium; a drum located beneath the screening medium to receive liquid passing through the screening medium, said drum being rotatable and having an opening through which liquid received in the drum is emitted therefrom; means for rotating the drum and means for sucking out air in the confines of the drum to develop a differential pressure (ΔP) with atmospheric pressure above the screening medium being in excess of the pressure below the screening medium during separation of the coarse particles from the suspension CHARACTERISED IN THAT the opening of the drum is located in a side wall of the drum and is arranged so that a venturi effect is caused at said opening by rotation of the drum which effect sucks out air from within the confines of the drum through said opening to create a partial vacuum within the drum and develop the differential pressure (ΔP) and wherein control means is provided whereby said differential pressure (ΔP) is controlled to be within a predetermined range and said control means causes air at atmospheric pressure to enter the drum when the differential pressure (ΔP) exceeds a maximum of the predetermined range.

Means may be provided to apply a pressurised gas above the screening medium and the pressurised gas may be compressed air.

The drum may be provided with side walls which are formed with a plurality of holes through which the finer particles in suspension are caused to be emitted. A plurality of outwardly projecting members may be provided on the drum adjacent the holes whereby rotation of the drum creates the venturi effect over the outer face of the members thereby sucking out the air through the holes and thus creating the partial vacuum within the confines of the drum. The outwardly projecting members may be short tubes co-axially aligned with the holes in the drum and the outer faces of the tubes may be formed at an angle to the axis of the tubes.

Alternatively the outwardly projecting members may be vanes attached to the drum.

A valve may be provided which is automatically actuated to cause air at atmospheric pressure to enter the confines of the drum when the differential pressure (ΔP) exceeds the maximum of the predetermined range.

Preferably the valve is located within the confines of the drum.

The drum may be rotatably mounted on a hollow vertical shaft which extends into the confines of the drum and the valve may be arranged to co-operate with the upper end surface of said shaft.

A passage within the hollow vertical shaft may extend from within the confines of the drum to an area outside the confines of the drum.

An embodiment of the invention will now be described by way of example only, with reference to the accompanying drawings in which:-
Figure 1 is a section view of the screening apparatus incorporating a rotating screen, and
Figure 2 is a scrap section view of parts seen in Figure 1, but to a larger scale
Figure 3 is a section view on the line III-III in Figure 1 and
Figure 4 is a view similar to Figure 3 but of an alternative embodiment
Figure 4A is a view similar to Figure 4 but of a further alternative embodiment
Figure 5 is a view similar to Figure 1 and showing the embodiment of the invention for both developing the differential pressure above and below the screen and controlling that differential pressure
Figure 6 is a section view on the line VI-VI of Figure 5
Figure 7 is a section view of the line VII-VII of Figure 6, and
Figure 8 is a section view showing an alternative valve member, and
Figure 9 is a section view showing yet another alternative arrangement of the valve member.

As seen in the drawings a screening apparatus comprises a hollow drum 1, open at the top and mounted on a flange 2 formed on the upper end of a shaft 3 which is supported in bearings 4 and 5 and rotated by means of an electric motor 6, the drive being transmitted by a belt 7 passing over pulleys 8 and 9. A circular piece of woven wire mesh screen cloth 12 having a nominal aperture size of 0.053 mm extends across the top of the drum 1 and is removably secured thereto. The walls of the drum depend downwardly where it is closed at its lower end by a skirt member 26. The drum is provided around the lower part of its periphery with a number of holes 25.

An annular skirt member 13 is clamped to a flange 10 on the upper rim of the drum. An annular member 11 is bolted to the rim and a launder 14 encircles the drum 1 below the skirt 13.

The arrangement is such that as a mixture of particles in suspension in a liquid is deposited on the screen 12 the finer particles pass through the mesh of the screen and the larger particles which cannot pass through the mesh are centrifuged towards and over the periphery of the screen into the launder 14 from whence they are emitted via an outlet 15.

Those particles which pass through the screen with the liquid phase are emitted outwardly through the holes 25 formed in the lower portion of the walls of the drum 1 and thence via a launder 27 to an outlet 28.

In order to improve the rate of throughput of the finer particles through the mesh screen it is arranged that the atmospheric pressure above the screening medium is greater than that below the screening medium.

To that end a pipe 50, leading from a source of compressed air [not shown] is located within the area of the apparatus above the screening medium and the enhanced pressure above the screening medium is found to expedite the passage there through of the finer particles in suspension.

Alternatively, reduced air pressure from a vacuum source [not shown] is fed to a pipe 52 located as shown outwardly of the periphery of the drum 1. The reduced pressure due to the vacuum source acts through the holes 25 to the inside of the drum and creates a partial vacuum therein, thus expediting the passage of the finer particles in suspension through the mesh screen.

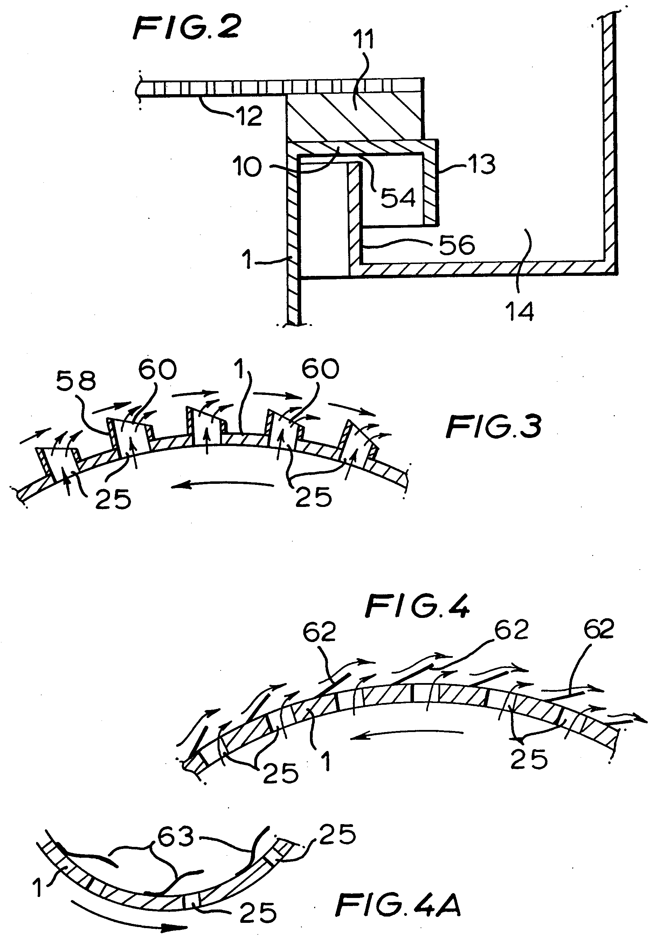

To ensure that the partial vacuum within the drum 1 is maintained due to the effect of the vacuum source acting through the inlet 52, it is so arranged that the sum of the cross sectional areas of the holes 25 is greater at all times than the area of the annular gap 54 between the flange 10 and the top most portion of the upstanding annular wall 56 of the launder 14. The gap 54 [Figure 2] would in this case be little more than a mere working clearance.

The holes 25 formed in the walls of the drum have the effect of causing air to be sucked out of the drum as it rotates. To enhance this effect even further the holes 25 are provided on the outside of the walls of the drum with short outwardly projecting tubular members 58. As seen in Figure 3 the outermost ends of the members 58 are formed at an angle with respect to their axes.

As the drum 1, with its mesh screen cloth 12, is rotated in an anti-clockwise direction as seen from above, the passage of air above the angled face 60 of each of the members creates a venturi effect, sucking air out of the drum and thus causing a partial vacuum to exist therein.

In a simpler form, there may be provided a series of angular vanes, indicated at 62 in Figure 4, each vane being set between a pair of the holes 25. The passage of air over the vanes has a venturi effect over the holes and creates a partial vacuum within the drum as described earlier. Alternatively vanes 63 may be located within the drum as seen in Figure 4A and act as scoops to assist in extracting the wetter parts of the suspension.

It was found that the provision of differential pressures above and below the screening medium causes a considerable increase in the speed of passage of the particle containing liquid phase. This is effective whether the differential pressures were caused by either increasing the pressure above the screen material or by decreasing the pressure below the screen.

For optimum operation of the screening material, the difference, ΔP, between the pressure above the screen and that below the screen has a well defined optimum range, depending on the aperture size of the screening mediums.

Typical values for the pressure differential between that above the screen and that below it [ΔP] are given for a range of aperture sizes in the Table 1, ΔP relating to a liquid phase consisting of essentially pure water i.e. with no dissolved surfactant, and a screen mesh made from stainless steel wire.

**Table 1**

| Meshes per Inch | Approx. Aperture Size / um | Maximum Value of ΔP | |
|---|---|---|---|
| | | p.s.i. | kNm⁻² |
| 400 | 38 | 0.8 | 5.5 |
| 350 | 45 | 0.7 | 4.8 |
| 300 | 53 | 0.64 | 4.4 |
| 200 | 75 | 0.46 | 3.2 |
| 170 | 90 | 0.4 | 2.8 |
| 150 | 104 | 0.3 | 2.1 |
| 120 | 125 | 0.26 | 1.8 |
| 100 | 150 | 0.24 | 1.66 |

The performance of the rotating screen was found to be improved when it contained a device which controlled the value of ΔP across the screening medium and prevented ΔP reaching too high a value.

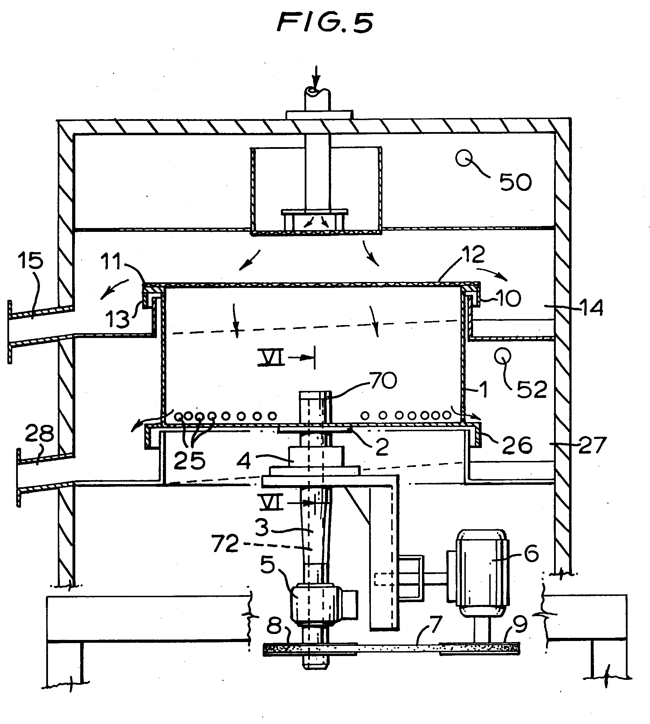

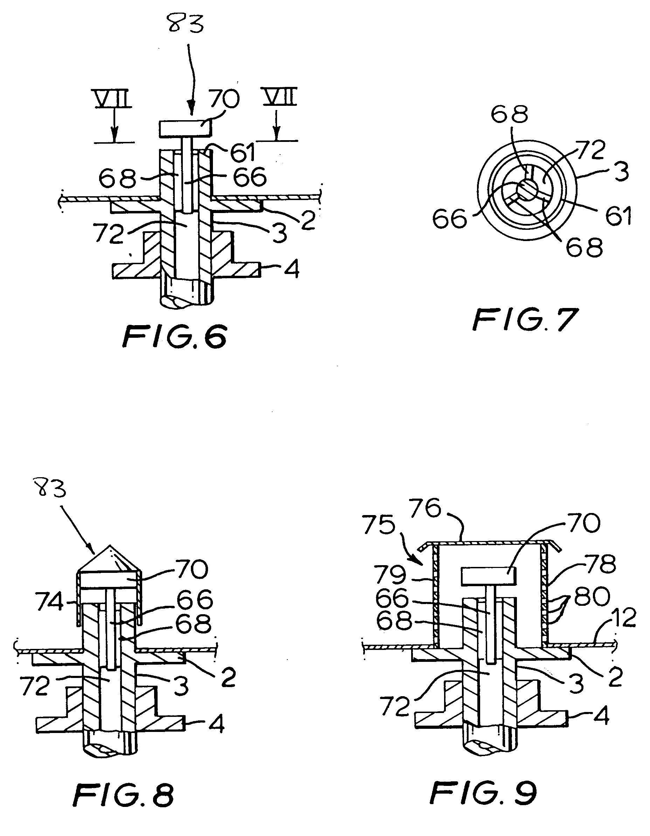

To this end, and in order to control the differential pressure as described, the topmost end of the hollow shaft 3 extends above its flange 2 into the confines of the drum 1 (see Figure 5) and the upper surface of the shaft is provided with an O-ring 61 [see Figures 6 and 7]. A valve 63 having a mushroom head 70 and a stem 66 is loosely guided within the interior of the hollow shaft 3 by means of vanes 68.

The weight of the valve is such that it rests with the underside of its mushroom head 70 against the O-ring 61 on top of the hollow shaft, sealing the interior of the drum from any ingress or air via the massage 72 formed in the shaft.

When the difference in pressures ΔP above and below the screen reaches a pre-determined level, the valve opens, as seen in Figures 6, 8 & 9, allowing air to enter the confines of the rotating drum 1 thus preventing the value of ΔP rising above the desired pre-determined level.

The valve 63 may be one of a set or interchangeable valves, each of a different weight, and each of which may be selected in accordance with the desired value of ΔP, which in turn depends on the circumstances prevailing i.e. the size of mesh apertures, value of surface tension of the liquid phase.

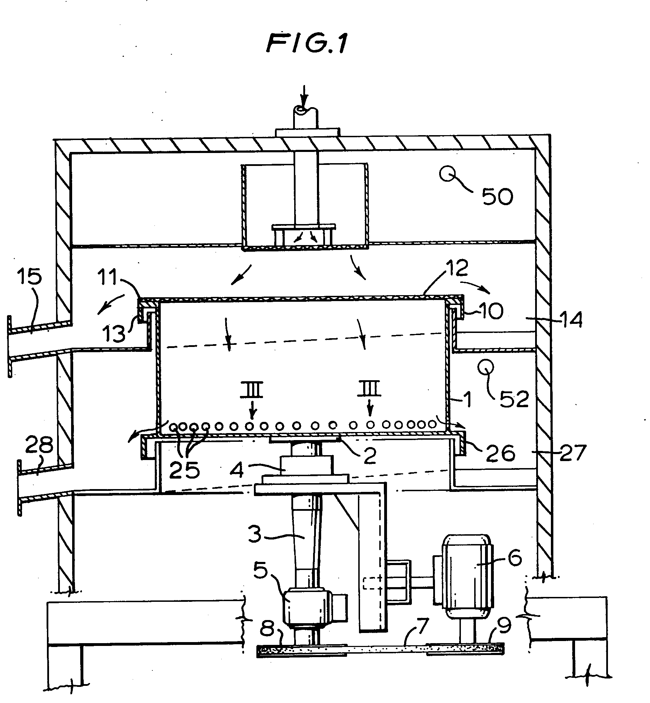

Under normal circumstances the pressure above the mesh screen is atmospheric pressure and that below the screen is dependent upon the partial vacuum generated below the screen e.g. via hole 52 seen below the launder 14 in Figure 1 and by the venturi effect.

When the value of ΔP rises above the optimum range for the circumstances prevailing, i.e. when the partial vacuum within the drum exceeds the predetermined level, this causes the valve head 70 to be raised from its seating on the O-ring 61 on the top surface of the hollow shaft 3, allowing ingress of air at atmospheric pressure to enter the confines of the drum, and thus reducing the value of ΔP.

In order to prevent slurry containing particles within the suspension falling on to and resting on the top of the valve head 70, the head nay be formed with an inverted conical upper surface 62 as seen in Figure 8, or with a domed upper surface. Any slurry which falls on to the top surface of the valve head is centrifuged therefrom.

Furthermore, a cylindrical skirt 74 may be provided to prevent any particles or particle-containing slurry becoming entrapped between the underside of the head 70 and the upper surface of she shaft 3.

In an alternative arrangement seen in Figure 9 the valve is enclosed within a cage structure 75 in order to prevent particles within the suspension falling on to the top of the valve head 70. An imperforate capping plate 76 is supported by the wall 78 of a cylinder 79 secured to and rotatable with the flange 2. The wall is formed with apertures 80 through which air passes to enter the interior of the drum when the valve head lifts to allow ingress of air through the bore 72 of the shaft 3. Alternatively the wall 78 may be imperforate but secured to the flange 2 by suitable brackets in order to create a gap between the bottom of the cylinder and the flange.

Although it has been said earlier that a vacuum source may be connected via hole 52 in the housing to create a reduced pressure within the drum 1, it is found that a reduced pressure is also established within the drum as the mixture of water and small particles are ejected through the holes 25 in the lower part of the walls of the drum. When this pressure has fallen to a level such that the pressure of air in the bore 72 of the drive shaft 3 is sufficient to overcome the weight of the valve 62, the valve rises to admit air under atmospheric pressure into the rotating drum thus reducing ΔP to within the optimum range. The valve then drops and the pressure in the rotating drum begins to fall again.

This has the effect of modulating the pressure differential, ΔP, to keep it within the optimum range.

## Claims

1. A process for continuously separating relatively coarse particles from a suspension of a mixture of particles in a liquid which comprises passing the suspension through a screening medium (12) which is rotating in its own plane so that the coarse particles are retained on the surface of the screening medium (12); receiving liquid passing through the screening medium within a drum (1) rotating below the screening medium, and developing a differential pressure (ΔP) by sucking out air in the confines of the drum so that atmospheric pressure above the screening medium (12) is in excess of the pressure below the screening medium, CHARACTERISED BY developing a venturi effect at an opening (25) in a side wall of the drum (1) as a result of rotation of the drum (1) for that effect to provide said sucking out of air from within the confines of the drum (1) and thereby create a partial vacuum within the drum and controlling said differential pressure (ΔP) to be within a predetermined range by admitting air at atmospheric pressure into the rotating drum (1) when the differential pressure (ΔP) exceeds a maximum of the predetermined range.

2. A process according to claim 1 wherein a pressurised gas is applied above the screening medium (12).

3. A process according to claim 2 wherein the pressurised gas is compressed air.

4. A process according to any one of the preceding claims wherein the liquid in the drum (1) having finer particles in suspension is caused to pass through said opening in the form of a plurality of holes (25) in said side wall of the drum (1).

5. A process according to claim 4 wherein air within the confines of the drum (1) is sucked out by means of a connection to a vacuum source.

6. A process according to either claim 4 or claim 5 wherein the partial vacuum within the drum (1) is created by means of a plurality of outwardly projecting members (58, 62) provided on the drum (1) adjacent the holes (25), and rotation of the drum (1) creates the venturi effect over an outer face (60) of the members (58, 62) thereby sucking out the air through the holes.

7. A process according to any one of the preceding claims wherein the air at atmospheric pressure is caused to enter the area below the screening medium (12) via a valve (63) which is automatically actuated in response to a variation in the differential pressure (ΔP) which cause ΔP to rise above the maximum of the predetermined range.

8. Apparatus for continuously separating relatively coarse particles from a suspension of a mixture of particles in a liquid which comprises a screening medium (12) rotatable in its own plane and means (6) for rotating the screening medium; means for depositing the suspension on a surface of the rotating screening medium (12) so that the coarse particles are retained on said surface of the screening medium; a drum (1) located beneath the screening medium (12) to receive liquid passing through the screening medium, said drum (1) being rotatable and having an opening (25) through which liquid received in the drum is emitted therefrom; means (6) for rotating the drum (1) and means for sucking out air in the confines of the drum (1) to develop a differential pressure (ΔP) with atmospheric pressure above the screening medium (12) being in excess of the pressure below the screening medium during separation of the coarse particles from the suspension CHARACTERISED IN THAT the opening (25) of the drum is located in a side wall of the drum (1) and is arranged so that a venturi effect is caused at said opening (25) by rotation of the drum (1) which effect sucks out air from within the confines of the drum (1) through said opening (25) to create a partial vacuum within the drum and develop the differential pressure (ΔP) and wherein control means (63) is provided whereby said differential pressure (ΔP) is controlled to be within a predetermined range and said control means (63) causes air at atmospheric pressure to enter the drum (1) when the differential pressure (ΔP) exceeds a maximum of the predetermined range.

9. Apparatus according to claim 8 wherein a pressurised gas is applied above the screening medium (12).

10. Apparatus according to claim 9 wherein the pressurised gas is compressed air.

11. Apparatus according to any one of claims 8 to 10 wherein the opening of the drum comprises a plurality of holes (25) provided in said walls of the drum (1) through which holes (25) liquid having finer particles in suspension is caused to be emitted from the drum and air is sucked out from the drum by said venturi effect.

12. Apparatus according to claim 11 wherein there is provided a plurality of outwardly projecting members (58, 62) on the drum (1) adjacent the holes (25) whereby rotation of the drum (1) creates the venturi effect over outer faces (60) of the members (58, 62) for sucking out the air in the drum through the holes (25).

13. Apparatus according to claim 12 wherein the outwardly projecting members are short tubes (58) co-axially aligned with the holes (25) in the drum (1).

14. Apparatus according to claim 13 wherein outer faces (60) of the tubes (58) are formed at an angle to the axes of the respective tubes (58).

15. Apparatus according to claim 12 wherein the outwardly projecting members are vanes (62) attached to the drum (1).

16. Apparatus according to any one of claims 8 to 15 wherein the control means includes a valve (83) which is automatically actuated to cause air at atmospheric pressure to enter the confines of the drum (1) when the differential pressure (ΔP) exceeds the maximum of the predetermined range.

17. Apparatus according to claim 16 wherein the valve (83) is located within the confines of the drum (1).

18. Apparatus according to claim 17 wherein the drum (1) is rotatably mounted on a hollow vertical shaft (3) which extends into the confines of the drum (1) and the valve (83) co-operates with an upper end surface of said shaft (3).

19. Apparatus according to claim 18 wherein a passage (72) within the hollow vertical shaft (3) extends from within the confines of the drum (1) to an area outside the confines of the drum (1).

20. Apparatus according to either claim 18 or claim 19 wherein the valve (83) is formed with a head (70), the underside of which is adapted to co-operate with an O-ring (61) set on or in the upper end surface of the shaft (3).

21. Apparatus according to any one of claims 18 to 20 wherein the valve (83) is formed with a downwardly depending stem (66) that is loosely guided in the hollow shaft (3) by means of vanes (68) which depend radially from the stem (66).

22. Apparatus according to any one of claims 18 to 21 wherein the valve (83) has a valve head (70) an upper surface (62) of which is of conical form and which head (70) is provided with a downwardly depending skirt (74) surrounding an upper portion of the shaft (3).

23. Apparatus according to any one of claims 18 to 22 wherein an upper portion of the shaft (3) and the valve (83) are located within the confines of a cage member (75).

24. Apparatus according to claim 23 wherein the cage member (75) is provided with a perforate cylinder wall (78) and an imperforate capping member (76).

25. Apparatus according to any one of claims 8 to 24 wherein there is provided a connection (52) to a vacuum source for sucking out air from within the confines of the drum (1).

## Patentansprüche

1. Verfahren zum kontinuierlichen Trennen von relativ groben Teilchen aus einer Suspension eines Gemisches von Teilchen in einer Flüssigkeit, welches aus der Hindurchleitung der Suspension durch ein Siebmedium (12) besteht, das in seiner eigenen Ebene dreht, sodaß die groben Teilchen an der Oberfläche des Siebmediums (12) zurückgehalten werden; der Aufnahme der durch das Siebmedium hindurchgehenden Flüssigkeit innerhalb einer Trommel (1), die unterhalb des Siebmediums dreht, und der Entwicklung eines Differentialdruckes (ΔP) durch ein Heraussaugen von Luft in den Begrenzungen der Trommel, sodaß der atmosphärische Druck oberhalb des Siebmediums (12) höher ist als der Druck unterhalb des Siebmediums, gekennzeichnet durch die Entwicklung einer Venturiwirkung an einer Öffnung (25) in einer Seitenwand der Trommel (1) als ein Ergebnis der Drehung der Trommel (1) für den Zweck der Bereitstellung des Heraussaugens der Luft von innerhalb der Begrenzungen der Trommel (1) und dadurch der Schaffung eines partiellen Vakuums innerhalb der Trommel sowie die Steuerung des Differentialdruckes (ΔP) auf einen vorbestimmten Bereich durch die Einleitung von Luft unter atmosphärischem Druck in die drehende Trommel (1), wenn der Differentialdruck (ΔP) höher wird als ein Maximum des vorbestimmten Bereichs.

2. Verfahren nach Anspruch 1, bei welchem ein Druckgas über dem Siebmedium (12) angelegt wird.

3. Verfahren nach Anspruch 2, bei welchem das Druckgas Druckluft ist.

4. Verfahren nach einem der vorhergehenden Ansprüche, bei welchem die Flüssigkeit in der Trommel (1) mit in Suspension befindlichen feineren Teilchen zur Hindurchleitung durch die Öffnung in der Form einer Vielzahl von Löchern (25) in der Seitenwand der Trommel (1) gebracht wird.

5. Verfahren nach Anspruch 4, bei welchem Luft innerhalb der Begrenzungen der Trommel (1) mittels eines Anschlusses an eine Vakuumquelle herausgesaugt wird.

6. Verfahren nach Anspruch 4 oder Anspruch 5, bei welchem das partielle Vakuum innerhalb der Trommel (1) mittels einer Vielzahl nach außen vorstehender Körper (58, 52) erzeugt wird, die an der Trommel (1) neben den Löchern (25) vorgesehen sind, und daß die Drehung der Trommel (1) die Venturiwirkung über einer Außenfläche (60) der Körper (58, 62) erzeugt, um dadurch die Luft durch die Löcher herauszusaugen.

7. Verfahren nach einem der vorhergehenden Ansprüche, bei welchem die Luft unter einem atmosphärischen Druck zum Eintritt in den Bereich unterhalb des Siebmediums (12) über ein Ventil (63) gebracht wird, das in Abhängigkeit von einer Veränderung bei dem Differentialdruck (ΔP) automatisch betätigt wird, um eine Erhöhung von ΔP über das Maximum des vorbestimmten Bereichs zu bewirken.

8. Vorrichtung zum kontinuierlichen Trennen von relativ groben Teilchen von einer Suspension eines Gemisches von Teilchen in einer Flüssigkeit, welche ein Siebmedium (12) aufweist, das in seiner eigenen Ebene drehbar ist, und eine Einrichtung (6) zum Drehen des Siebmediums; eine Einrichtung zum Absetzen der Suspension auf einer Oberfläche des drehenden Siebmediums (12), sodaß die groben Teilchen an der Oberfläche des Siebmediums zurückgehalten werden; eine Trommel (1), die unterhalb des Siebmediums (12) angeordnet ist, um die durch das Siebmedium hindurchgehende Flüssigkeit aufzunehmen, wobei die Trommel (1) drehbar ist und eine Öffnung (25) hat, durch welche hindurch die in der Trommel aufgenommene Flüssigkeit von dort entlassen wird; eine Einrichtung (6) zur Drehung der Trommel (1) und eine Einrichtung zum Heraussaugen von Luft in den Begrenzungen der Trommel (1), um einen Differentialdruck (ΔP) zu entwickeln, wobei der atmosphärische Druck oberhalb des Siebmediums (12) höher ist als der Druck unterhalb des Siebmediums während der Trennung der groben Teilchen von der Suspension, dadurch gekennzeichnet, daß die Öffnung (25) der Trommel in einer Seitenwand der Trommel (1) vorgesehen und derart angeordnet ist, daß eine Venturiwirkung an der Öffnung (25) durch eine Drehung der Trommel (1) bewirkt wird, wobei diese Wirkung Luft von innerhalb der Begrenzungen der Trommel (1) durch die Öffnung (25) hindurch heraussaugt, um ein partielles Vakuum innerhalb der Trommel zu erzeugen und den Differentialdruck (ΔP) zu entwickeln, und wobei eine Steuereinrichtung (63) vorgesehen ist, wodurch der Differentialdruck (ΔP) auf einen vorbestimmten Bereich gesteuert wird, und die Steuereinrichtung (63) Luft unter atmosphärischem Druck zum Eintritt in die Trommel (1) bringt, wenn der Differentialdruck (ΔP) höher als ein Maximum des vorbestimmten Bereichs wird.

9. Vorrichtung nach Anspruch 8, bei welcher ein Druckgas über dem Siebmedium (12) angelegt ist.

10. Vorrichtung nach Anspruch 9, bei welcher das Druckgas Druckluft ist.

11. Vorrichtung nach einem der Ansprüche 8 bis 10, bei welcher die Öffnung der Trommel eine Vielzahl von Löchern (25) aufweist, die in den Wänden der Trommel (1) vorgesehen sind, wobei durch diese Löcher (25) hindurch Flüssigkeit mit in Suspension befindlichen feineren Teilchen zum Austritt aus der Trommel gebracht wird und Luft von der Trommel durch die Venturiwirkung herausgesaugt wird.

12. Vorrichtung nach Anspruch 11, bei welcher eine Vielzahl von nach außen vorstehenden Körpern (58, 62) an der Trommel (1) neben den Löchern (25) vorgesehen ist, wodurch die Drehung der Trommel (1) die Venturiwirkung über den Außenflächen (60) der Körper (58, 62) für ein Heraussaugen der Luft in der Trommel durch die Löcher (25) hindurch bewirkt.

13. Vorrichtung nach Anspruch 12, bei welcher die nach außen vorstehenden Körper kurze Rohre (58) sind, die mit den Löchern (25) in der Trommel (1) koaxial fluchten.

14. Vorrichtung nach Anspruch 13, bei welcher die Außenflächen (60) der Rohre (58) unter einem Winkel zu den Achsen der betreffenden Rohre (58) geformt sind.

15. Vorrichtung nach Anspruch 12, bei welcher die nach außen vorstehenden Körper an der Trommel (1) befestigte Flügel (62) sind.

16. Vorrichtung nach einem der Ansprüche 8 bis 15, bei welcher die Steuereinrichtung ein Ventil (83) aufweist, das automatisch betätigt wird, um Luft bei atmosphärischem Druck für einen Eintritt in die Begrenzungen der Trommel (1) zu bringen, wenn der Differentialdruck (ΔP) höher wird als das Maximum des vorbestimmten Bereichs.

17. Vorrichtung nach Anspruch 16, bei welcher das Ventil (83) innerhalb der Begrenzungen der Trommel (1) angeordnet ist.

18. Vorrichtung nach Anspruch 17, bei welcher die Trommel (1) an einer hoffen vertikalen Welle (3) drehbar befestigt ist, die in die Begrenzungen der Trommel (1) hinein verläuft, und das Ventil (83) mit einer oberen Endfläche der Welle (3) zusammenwirkt.

19. Vorrichtung nach Anspruch 18, bei welcher ein Durchgang (72) innerhalb der hohlen vertikalen Welle (3) von innerhalb der Begrenzungen der Trommel (1) bis zu einem Bereich außerhalb der Begrenzungen der Trommel (1) verläuft.

20. Vorrichtung nach Anspruch 18 oder Anspruch 19, bei welcher das Ventil (83) mit einem Kopf (70) geformt ist, dessen Unterseite für ein Zusammenwirken mit einem O-Ring (61) angepaßt ist, der an oder in der oberen Endfläche der Welle (3) eingesetzt ist.

21. Vorrichtung nach einem der Ansprüche 18 bis 20, bei welcher das Ventil (83) mit einem nach unten herabhängenden Schaft (66) geformt ist, der in der hohlen Welle (3) mittels Flügeln (68) lose geführt wird, die in radialer Richtung von dem Schaft (66) herabhängen.

22. Vorrichtung nach einem der Ansprüche 18 bis 21, bei welcher das Ventil (83) einen Ventilkopf (70) aufweist, bei dem eine obere Fläche (62) konisch geformt ist, wobei der Kopf (70) mit einem nach unten herabhängenden Rand (74) versehen ist, der einen oberen Bereich der Welle (3) umgibt.

23. Vorrichtung nach einem der Ansprüche 18 bis 22, bei welcher ein oberer Bereich der Welle (3) und das Ventil (83) innerhalb der Begrenzungen eines Käfigkörpers (75) angeordnet sind.

24. Vorrichtung nach Anspruch 23, bei welcher der Käfigkörper (75) mit einer perforierten Zylinderwand (78) und einem nicht perforierten Abdeckkörper (76) versehen ist.

25. Vorrichtung nach einem der Ansprüche 8 bis 24, bei welcher ein Anschluß (52) an eine Vakuumquelle für ein Heraussaugen von Luft von innerhalb der Begrenzungen der Trommel (1) vorgesehen ist.

## Revendications

1. Procédé pour séparer de façon continue les particules relativement grosses d'une suspension d'un mélange de particules dans un liquide, ce procédé consistant à faire passer la suspension à travers un agent de tamisage (12) qui tourne dans son propre plan, de façon que les grosses particules soient retenues sur la surface de l'agent de tamisage (12) ; à recevoir le liquide passant à travers l'agent de tamisage, dans un tambour rotatif (1) placé au-dessous de l'agent de tamisage, et à développer une pression différentielle (ΔP) en aspirant l'air dans les limites du tambour de façon que la pression atmosphérique au-dessus de l'agent de tamisage (12) soit supérieure à la pression au-dessous de cet agent de tamisage, procédé caractérisé en ce qu'il consiste à développer un effet de venturi à l'endroit d'une ouverture (25) percée dans une paroi latérale du tambour (1), du fait de la rotation du tambour (1), pour que cet effet produise l'aspiration de l'air de l'intérieur des limites du tambour (1) et crée ainsi un vide partiel à l'intérieur du tambour, et à contrôler la pression différentielle (ΔP) de façon qu'elle reste à l'intérieur d'une plage prédéterminée, en admettant de l'air à la pression atmosphérique dans le tambour rotatif (1) lorsque la pression différentielle(ΔP) dépasse un maximum de la plage prédéterminée.

2. Procédé selon la revendication 1, caractérisé en ce qu'un gaz pressurisé est appliqué au-dessus de l'agent de tamisage (12).

3. Procédé selon la revendication 2, caractérisé en ce que le gaz pressurisé est de l'air comprime.

4. Procédé selon l'une quelconque des revendications précédentes, caractérisé en ce que le liquide contenu dans le tambour (1), comportant des particules plus fines en suspension, est amené à passer à travers l'ouverture se présentant sous la forme d'une pluralité de trous (25) percés dans la paroi latérale du tambour (1).

5. Procédé selon la revendication 4, caractérisé en ce que l'air à l'intérieur des limites du tambour (1) est aspiré par branchement à une source de vide.

6. Procédé selon l'une quelconque des revendications 4 ou 5, caractérisé en ce que le vide partiel à l'intérieur du tambour (1) est créé au moyen d'une pluralité d'éléments faisant saillie vers l'extérieur (58, 62), qui sont formés sur le tambour (12) au voisinage des trous (25), et en ce que la rotation du tambour (1) crée l'effet de venturi sur une face extérieure (60) des éléments (58, 62), en aspirant ainsi l'air par les trous.

7. Procédé selon l'une quelconque des revendications précédentes, caractérisé en ce que l'air à la pression atmosphérique est amené à pénétrer dans la zone située au-dessous de l'agent de tamisage (12) en passant par une soupape (63) qui est actionnée automatiquement en réponse à une variation de la pression différentielle (ΔP) faisant monter cette pression différentielle (ΔP) au-dessus du maximum de la plage prédéterminée.

8. Appareil pour séparer de façon continue les particules relativement grosses d'une suspension d'un mélange de particules dans un liquide, cet appareil comprenant un agent de tamisage (12) pouvant tourner dans son propre plan, et des moyens (6) pour faire tourner l'agent de tamisage ; des moyens pour déposer la suspension sur une surface de l'agent de tamisage rotatif (12), de façon que les grosses particules soient retenues sur cette surface de l'agent de tamisage ; un tambour (1) placé au-dessous de l'agent de tamisage (12) pour recevoir le liquide passant à travers cet agent de tamisage, ce tambour (1) étant rotatif et comportant une ouverture (25) par laquelle le liquide reçu dans le tambour est évacué de celui-ci ; des moyens (6) pour faire tourner le tambour (1) et des moyens pour aspirer l'air dans les limites du tambour (1) de manière à développer une pression différentielle (ΔP), la pression atmosphérique au-dessus de l'agent de tamisage (12) étant supérieure à la pression au-dessous de l'agent de tamisage pendant qu'on sépare les grosses particules de la suspension, appareil caractérisé en ce que l'ouverture (25) du tambour est située dans une paroi latérale du tambour (1) et disposée de façon qu'un effet de venturi soit produit à l'endroit de cette ouverture (25) par la rotation du tambour (1), cet effet de venturi produisant l'aspiration de l'air de l'intérieur des limites du tambour (1) par l'ouverture (25), de manière à créer un vide partiel à l'intérieur du tambour et à développer la pression différentielle (ΔP), et en ce qu'on utilise des moyens de commande (63) pour contrôler la pression différentielle (ΔP) de façon qu'elle reste à l'intérieur d'une plage prédéterminée et que les moyens de commande (63) produisent l'introduction d'air à la pression atmosphérique dans le tambour (1) lorsque la pression différentielle (ΔP) dépasse un maximum de la plage prédéterminée.

9. Appareil selon la revendication 8, caractérisé en ce qu'un gaz pressurisé est appliqué au-dessus de l'agent de tamisage (12).

10. Appareil selon la revendication 9, caractérisé en ce que le gaz pressurisé est de l'air comprimé.

11. Appareil selon l'une quelconque des revendications 8 à 10, caractérisé en ce que l'ouverture du tambour consiste en une pluralité de trous (25) percés dans les parois du tambour (1), trous (25) par lesquels le liquide contenant les particules plus fines en suspension est amené à être évacué du tambour, tandis que l'air est aspiré du tambour par l'effet de venturi.

12. Appareil selon la revendication 11, caractérisé en ce qu'on utilise une pluralité d'éléments faisant saillie vers l'extérieur (58, 62) sur le tambour (1) au voisinage des trous (25), de façon que la rotation du tambour (1) créé l'effet de venturi sur les faces extérieures (60) des éléments (58, 62) pour aspirer l'air du tambour par les trous (25).

13. Appareil selon la revendication 12, caractérisé en ce que les éléments faisant saillie vers l'extérieur sont des tubes courts (58) alignés coaxialement avec les trous (25) du tambour (1).

14. Appareil selon la revendication 13, caractérisé en ce que les faces extérieures (60) des tubes (58) sont formées sous un certain angle par rapport aux axes des tubes respectifs (58).

15. Appareil selon la revendication 12, caractérisé en ce que les éléments faisant saillie vers l'extérieur sont des ailettes (62) attachées au tambour (1).

16. Appareil selon l'une quelconque des revendications 8 à 15, caractérisé en ce que les moyens de commande comprennent une soupape (63) qui est actionnée automatiquement pour faire pénétrer de l'air à la pression atmosphérique dans les limites du tambour (1) lorsque la pression différentielle (ΔP) dépasse le maximum de la plage prédéterminée.

17. Appareil selon la revendication 16, caractérisé en ce que la soupape (63) est placée à l'intérieur des limites du tambour (1).

18. Appareil selon la revendication 17, caractérisé en ce que le tambour (1) est monté en rotation sur un arbre vertical creux (3) qui pénètre à l'intérieur des limites du tambour (1), et en ce que la soupape (63) coopère avec une surface d'extrémité supérieure de l'arbre (3).

19. Appareil selon la revendication 18, caractérisé en ce qu'un passage (72) formé à l'intérieur de l'arbre vertical creux (3) s'étend de l'intérieur des limites du tambour (1) jusqu'à une zone située à l'extérieur des limites du tambour (1).

20. Appareil selon l'une quelconque des revendications 18 ou 19, caractérisé en ce que la soupape (63) est munie d'une tête (70) dont la face inférieure est destinée à coopérer avec un joint torique (61) monté sur ou dans la surface d'extrémité supérieure de l'arbre (3).

21. Appareil selon l'une quelconque des revendications 18 à 20, caractérisé en ce que la soupape (63) est munie d'une tige dirigée vers le bas (66) qui est guidée avec jeu dans l'arbre creux (3) au moyen d'ailettes (68) qui partent radialement de la tige (66).

22. Appareil selon l'une quelconque des revendications 18 à 21, caractérisé en ce que la soupape (63) comporte une tête de soupape (70) dont la surface supérieure (62) est de forme conique, cette tête (70) étant munie d'une jupe partant vers le bas (74) qui entoure une partie supérieure de l'arbre (3).

23. Appareil selon l'une quelconque des revendications 18 à 22, caractérisé en ce que la partie supérieure de l'arbre (3) et la soupape (63) sont logées à l'intérieur des limites d'un élément de cage (75).

24. Appareil selon la revendication 23, caractérisé en ce que l'élément de cage (75) est muni d'une paroi cylindrique perforée (78) et d'un élément de capot non perforé (76).

25. Appareil selon l'une quelconque des revendications 8 à 24, caractérisé en ce l'on utilise un branchement (52) à une source de vide pour aspirer de l'air de l'intérieur des limites du tambour (1).
